# EUROPEAN PATENT SPECIFICATION

(11) **EP 1 705 081 B1**
(45) Date of publication and mention of the grant of the patent: **29.10.2008**
(21) Application number: 06005789.0
(22) Date of filing: 21.03.2006
(51) Int. Cl.: B60R 22/44, B60R 22/46

(54) **Seat belt retractor and seat belt apparatus employing the same**
Gurtaufroller und Sicherheitsgurteinrichtung mit einem solchen
Rétracteur pour ceinture de sécurité et système de ceinture de sécurité utilisant celui-ci

(30) Priority: 22.03.2005 JP 2005082105
(43) Date of publication of application: 27.09.2006
(73) Proprietor: TAKATA CORPORATION, Minato-ku, Tokyo 106-8510 (JP)
(72) Inventor: Nomura, Yasuaki, Minato-ku Tokyo 106-8510 (JP)
(74) Representative: Banzer, Hans-Jörg

(56) References cited:
- EP-A- 1 022 201
- EP-A- 1 225 105
- WO-A-20/04014704
- DE-A1- 4 314 176
- DE-A1- 4 342 666
- DE-A1- 10 052 112
- DE-A1- 19 640 842
- US-A1- 2004 069 891

## Description

### [Technical Field of the Invention]

The present invention relates to a technical field of a seat belt retractor which is installed in a vehicle such as an automobile and which conducts the winding and unwinding of a seat belt by a motor for restraining and protecting an occupant and a seat belt apparatus employing the same and, more particularly, to a technical field of a motor-driven type seat belt retractor having an energy absorbing mechanism (hereinafter, referred to as "EA mechanism": functioning as a load limiting mechanism) which absorbs impact energy applied to an occupant so as to limit load on the seat belt in the event of an emergency such as a vehicle collision where a large deceleration, as compared to normal deceleration, acts on the vehicle.

### [Related Art]

Vehicles such as automobiles have been equipped with seat belt apparatuses. In the event of an emergency such as a vehicle collision where a large deceleration acts on the vehicle, such a seat belt apparatus restraints an occupant with a seat belt thereof so as to prevent the occupant from jumping out of the seat, thereby protecting the occupant. The seat belt apparatus is provided with a seat belt retractor which winds up the seat belt such that the seat belt can be unwound if needed.

Among such seat belt retractors, a seat belt retractor which conducts the winding and unwinding of a seat belt by a motor has been proposed (for example, see the Japanese Translation of PCT International Application 2003-507252). The seat belt retractor disclosed in the Japanese Translation of PCT International Application 2003-507252 has an electric motor which is disposed coaxially and in series with a belt reel on one side of the belt reel in the axial direction so that the rotation of the electric motor is reduced by a reduction mechanism composed of a planetary gear reduction mechanism and is transmitted to the belt reel. The belt reel is rotated in a belt winding direction and a belt unwinding direction by the rotation of the electric motor, whereby the seat belt can be wound up onto and unwound from the belt reel.

On the other hand, a seat belt retractor with a load limiting mechanism has been proposed (For example, see the Japanese Unexamined Patent Publication No. 2004-249968). The load limiting mechanism comprises an EA mechanism which absorbs impact energy acting on an occupant who is about to move by inertia force when the seat belt is locked from being unwound in the event of an emergency such as a vehicle collision where a large deceleration acts on the vehicle in the state the occupant wears the seat belt.

### [Disclosure of the Invention]

### [Problems to be solved by the Invention]

However, since the electric motor is disposed coaxially and in series with the belt reel on one side of the belt reel, the seat belt retractor disclosed in the aforementioned Japanese Translation of PCT International Application 2003-507252 has a problem that the size thereof in the axial direction of the belt reel should be large.

The applicant of the present invention has developed a seat belt retractor in which a spool (corresponding to the belt reel disclosed in the Japanese Translation of PCT International Application 2003-507252) for winding up the seat belt is formed in a cylindrical shape and a motor is disposed in a columnar space inside the spool coaxially with the spool so as to reduce the length of the spool in the axial direction, thereby achieving the seat belt retractor to be formed compact. The applicant has filed a patent application relating this seat belt retractor (Japanese Patent Application No. 2004-349058).

By the way, the motor-driven type seat belt retractor of the Patent Application No. 2004-349058 has no EA mechanism capable of absorbing impact energy acting on an occupant in the event of an emergency as disclosed in the aforementioned Japanese Unexamined Patent Publication No. 2004-249968. It is preferable to provide an EA mechanism to this motor-driven type seat belt retractor, but it is difficult to simply add an EA mechanism.

DE 100 52 112 A1 discloses a seat belt retractor according to the preamble of claim 1.

The present invention was made under the aforementioned circumstances and an object of the present invention is to provide a motor-driven type seat belt retractor which can be formed compact and is capable of absorbing impact energy on an occupant in the event of an emergency such as a vehicle collision.

Another object of the present invention is to provide a seat belt apparatus which absorbs impact energy on an occupant when restraining the occupant by a seat belt in the event of an emergency such as a vehicle collision so that the occupant can be effectively restrained while softly protected without receiving large force from the seat belt.

### [Means to solve the Problems]

According to the present invention, this object is achieved by a seat belt retractor as defined in claim 1. The dependent claims define preferred and advantageous embodiments of the invention.

A seat belt retractor of the invention is characterized by comprising a cylindrical spool which winds up and unwinds a seat belt, an electric motor having a motor shaft and being disposed coaxially with said spool in a columnar space inside said spool and which generates rotary driving force for rotating said spool in the belt winding direction and the belt unwinding direction, a planetary gear train reduction mechanism which is disposed between said spool and said motor to reduce and transmit the rotation of said motor, and an energy absorbing mechanism which absorbs impact energy on an occupant when said spool rotates in the belt unwinding direction in the event of an emergency.

The motor is coaxially disposed in a columnar space inside the cylindrical spool so that the seat belt retractor can be formed compact in the axial direction of the spool. The impact energy on the occupant is absorbed by the energy absorbing mechanism in the event of an emergency such as a vehicle collision, thereby limiting the force acting on the seat belt not to be too large.

A seat belt retractor according to a preferred embodiment is characterized by further comprising a locking mechanism having a locking member which rotates together with said spool in the normal state and being actuated in the event of an emergency, wherein said locking member of said locking mechanism is adapted to rotate freely in the normal state and is locked from rotation in the belt unwinding direction in the event of an emergency, and wherein said energy absorbing mechanism is composed of a torsion bar disposed between said spool and said locking member. Since the energy absorbing mechanism is composed of a torsion bar, the structure of the energy absorbing mechanism is simplified.

In a seat belt retractor according to another preferred embodiment, the torsion bar is a motor shaft of the motor.

Since the torsion bar is composed of the shaft of the motor, the number of components is reduced and further the structure of the EA mechanism is simplified.

According to another preferred embodiment, a seat belt retractor comprises a locking mechanism having a locking member which rotates together with said spool in the normal state and being actuated in the event of an emergency and an energy absorbing mechanism which absorbs impact energy on the occupant when said locking mechanism is actuated and said spool rotates in the belt unwinding direction in the event of an emergency, wherein said locking member of said locking mechanism is adapted to rotate together with said spool and said energy absorbing mechanism is composed of a friction disc which is adapted to rotate with friction, and said locking member is separated from said friction disc in the normal state and is rotationally connected to said friction disc in the event of an emergency. This represents another means for effectively absorbing the impact energy on the occupant.

According to this embodiment, the absorption of impact energy on the occupant is performed by the friction disc, thereby increasing the degree of freedom of design about the rotational amount of the spool after the locking mechanism is actuated in the event of an emergency and thus setting variously the effect of absorbing the impact energy on the occupant according to need.

Since the energy absorbing mechanism by the friction disc is provided only on one of the side walls of the base frame, the entire size in the axial direction of the seat belt retractor is not so largely increased even with the energy absorbing mechanism, thereby effectively achieving the reduction in size of the seat belt retractor. The energy absorbing mechanism by the friction disc, the side wall for the same, the locking mechanism, and the deceleration sensing means are combined into a unit, thereby facilitating the mounting of these components to the seat belt retractor.

In a seat belt retractor according to another preferred embodiment said friction disc is structured to have a multiple disc structure composed of a plurality of discs, thereby further effectively absorbing the impact energy on the occupant without increasing the size of the seat belt retractor.

According to another preferred embodiment, a seat belt retractor comprises the above-mentioned locking mechanism and energy absorbing mechanism composed of a torsion bar as well as the above-mentioned locking mechanism and energy absorbing mechanism composed of a friction disc. In such an embodiment the absorption of impact energy on the occupant is also performed by the friction disc in addition to the absorption of impact energy on the occupant by the torsion bar, thereby further effectively absorbing the impact energy on the occupant.

A seat belt retractor according to a preferred embodiment is characterized in that said energy absorbing mechanism is a control unit for driving said electric motor to rotate in the belt unwinding direction in the event of an emergency.

According to this embodiment, the impact energy on the occupant is absorbed by the control unit driving the electric motor to rotate in the belt unwinding direction in the event of an emergency, whereby the impact energy on the occupant can be absorbed without any mechanical EA mechanism so that the load applied on the seat belt is limited without any mechanical load limiting mechanism. Therefore, the structure of the EA mechanism (i.e. the load limiting mechanism) can be effectively simplified and the further reduction in size of the seat belt retractor can be achieved.

A seat belt apparatus according to a preferred embodiment is characterized by comprising at least: a seat belt for restraining an occupant; a seat belt retractor for winding and unwinding said seat belt; a tongue slidably supported by said seat belt; and a buckle to which said tongue is detachably latched, wherein said seat belt retractor is a seat belt retractor according to the invention or any of the above-mentioned preferred embodiments.

In this seat belt apparatus employing the seat belt retractor of the present invention, the impact energy on the occupant can be absorbed by the energy absorbing mechanism when the occupant is restrained by the seat belt in the event of an emergency such as a vehicle collision, whereby the occupant can be effectively restrained while softly protected without receiving large force from the seat belt

### [Brief Explanation of the drawings]

Fig. 1 is an illustration schematically showing an embodiment of a seat belt apparatus employing a seat belt retractor according to the present invention.
Fig. 2 is a vertical sectional view schematically showing an embodiment of the seat belt retractor according to the present invention.
Fig. 3(a) is a sectional view taken along a line A-A in Fig. 2, a line J-J in Fig. 8, and a line L-L in Fig. 9 and Fig. 3(b) is a sectional view taken along a line B-B in Fig. 2 and a line K-K in Fig. 8.
Fig. 4 is a sectional view similar to Fig. 2, but showing another embodiment of the seat belt retractor of the present invention.

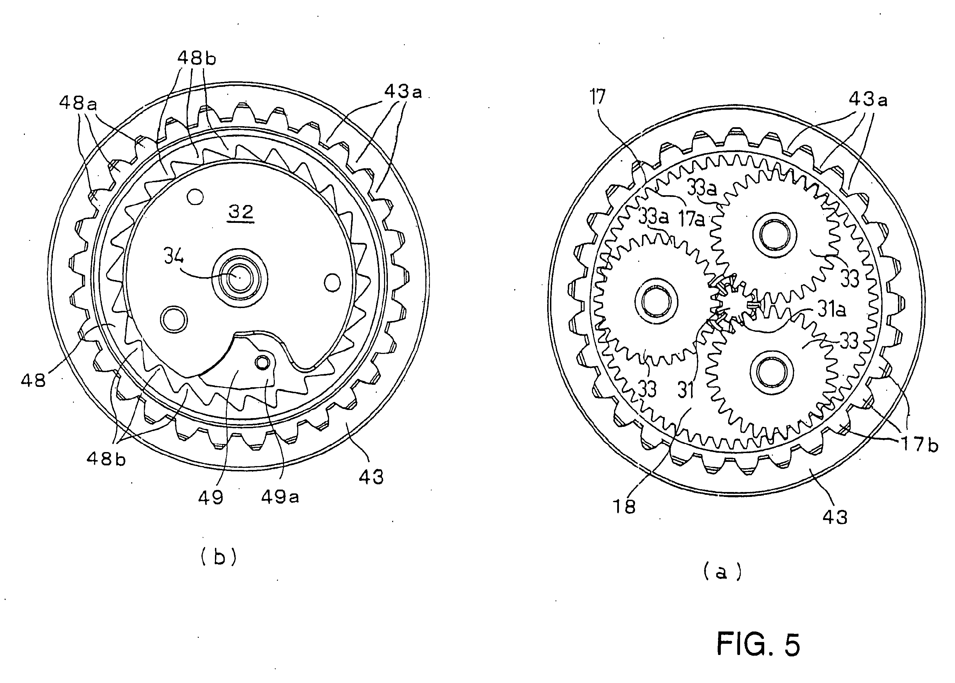

Fig. 5(a) is a sectional view taken along a line C-C in Fig. 4, a line E-E in Fig. 6, and a line G-G in Fig. 7 and Fig. 5(b) is a sectional view taken along a line D-D in Fig. 4, a line F-F in Fig. 6, and a line H-H in Fig. 7.
Fig. 6 is a sectional view similar to Fig. 2, but showing another embodiment of the seat belt retractor of the present invention.
Fig. 7 is a sectional view similar to Fig. 2, but showing further another embodiment of the seat belt retractor of the present invention.
Fig. 8 is a sectional view similar to Fig. 2, but showing further another embodiment of the seat belt retractor of the present invention.
Fig. 9 is a sectional view similar to Fig. 2, but showing further another embodiment of the seat belt retractor of the present invention. [Best Modes for carrying out the Invention]

Hereinafter, best modes for carrying out the present invention will be described with reference to the attached drawings.

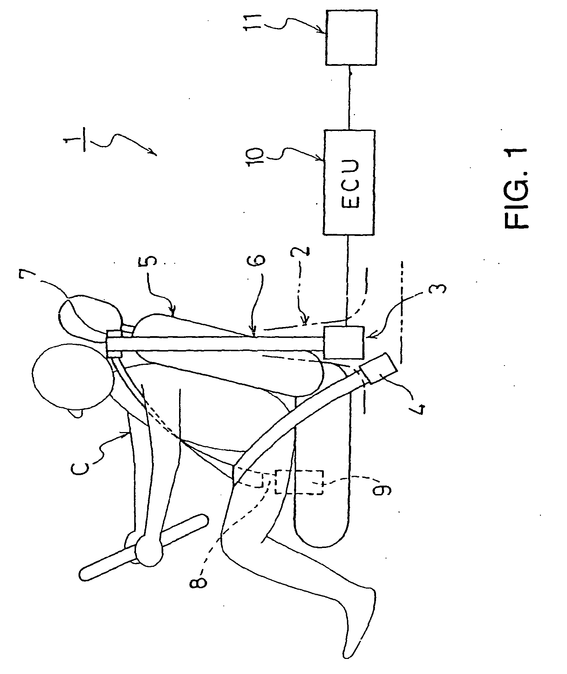

Fig. 1 is an illustration schematically showing an embodiment of a seat belt apparatus employing a seat belt retractor according to the present invention.

As shown in Fig. 1, a seat belt apparatus 1 of this embodiment comprises a seat belt retractor 3 which is fixed to a vehicle body such as a B-pillar 2 and is driven by a motor, a seat belt 6 which can be unwound from the seat belt retractor 3 and is provided, at its end, with a belt anchor 4 which is fixed to a floor of the vehicle body or a vehicle seat 5, a deflection fitting 7 which is fixed to a vehicle body such as a center pillar to guide the seat belt 6 unwound from the seat belt retractor 3 to a shoulder of an occupant C, a tongue 8 which is slidably supported by the seat belt 6 guided from the deflection fitting 7, a buckle 9 which is fixed to the floor of the vehicle body or the vehicle seat and with which the tongue 8 is latched, an electric control unit (ECU) 10 for controlling the motor of the seat belt retractor 3, and input means 11 for detecting various information required for controlling the motor of the seat belt retractor 3 such as information about collision prediction and collision occurrence of the vehicle to which the seat belt device 1 is mounted, information about the driving state of the vehicle, information about the sitting position and the body size of the occupant C seated in a vehicle seat 5, information about traffic conditions around the vehicle, information about weather condition and about time zone, information about the amount of winding or unwinding the seat belt 6, information about latching between the tongue 8 and the buckle 9 from a buckle switch, and the like, and inputting such information into the ECU 10 anytime or at predetermined intervals. The belt anchor 4, the seat belt 6, the deflection fitting 7, the tongue 8, and the buckle 9 may be conventionally known ones.

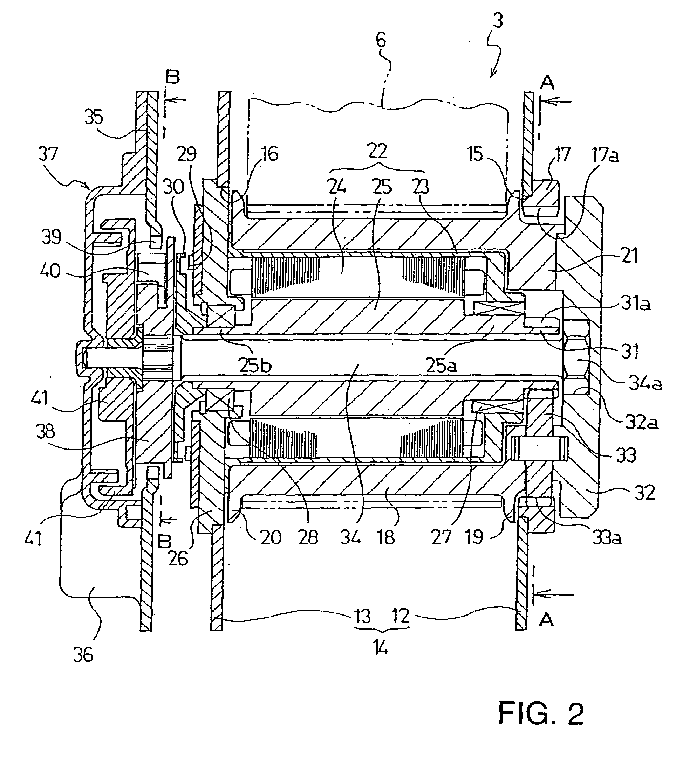

Fig. 2 is a vertical sectional view schematically showing an embodiment of a seat belt retractor according to the present invention.

As shown in Fig. 2, a seat belt retractor 3 of this embodiment comprises a base frame 14 having a pair of left and right side walls 12 and 13. The side walls 12 and 13 are provided with large circular openings 15 and 16 which are coaxially formed, respectively. Fitted in the opening 15 of one of the side walls 12 is an annular internal gear 17 having internal teeth 17a.

A spool 18 for winding the seat belt 6 such that the seat belt 6 can be unwound is disposed between the side walls 12 and 13. The spool 18 is provided at its both ends with flanges 19, 20 for guiding the seat belt 6 when being wound, respectively. The spool 18 is formed in a cylindrical shape of which an end on the side wall 12 side has an annular end wall 21 having a center opening and the other end on the side wall 13 side opens.

An electric motor 22 for generating rotary driving force for rotating the spool 18 in the belt winding direction and the belt unwinding direction is inserted through the open end at the side wall 13 side so that the electric motor 22 is accommodated in the spool 18 of a cylindrical shape with an end wall. The electric motor 22 is an electric motor called "brushless motor of inner rotor type" and comprises a cylindrical motor housing 23, an annular stator 24 composed of a coil which is accommodated in and fixed to the motor housing 23, and a rotor 25 composed of a magnet which axially extends through the motor housing 23 and the stator 24.

Most parts of the motor housing 23 are accommodated in the spool 18. An end member 26 of the motor housing 23 on the side wall 13 side is composed of an annular disc and is fitted in the opening 16 of the side wall 13 so that the end member 26 is fixed to the side wall 13, whereby the motor housing 23 is fixed to the side wall 13. The stator 24 is positioned inside the motor housing 23 and is fixed to the motor housing 23. The rotor 25 is formed into a cylindrical shape and has both ends 25a, 25b which are rotatably supported by the motor housing 23 via a pair of bearings 27 and 28, respectively. Therefore, the rotor 25 is structured to function as a motor shaft of the motor 22. The electric motor 22 is accommodated in the spool 18 such that the rotor 25, i.e. the motor shaft, is arranged coaxially with the spool 18.

A rotation sensor 29 composed of a hall element is attached to the end member 26 of the motor housing 23, while a magnetic disc 30 is attached to the rotor 25 to face the rotation sensor 29 such that the magnetic disc 30 can rotate together with the rotor 25. The rotation sensor 29 and the magnetic disc 30 compose an input means for inputting the information about the amount of winding or unwinding the seat belt 6 into the ECU 10 as one of the input means 11. The rotation sensor 29 and the magnetic disc 30 cooperate together to detect the rotational position of the rotor 25. From information about the rotational position of the rotor 25, the amount of winding or unwinding the seat belt 6 by the spool 18 can be obtained. That is, the rotation sensor 29 and the magnetic disc 30 as position detecting means for detecting the rotational position of the rotor 25 are also used as a seat belt winding/unwinding amount detecting means for detecting the amount of winding or unwinding the seat belt 6.

Based on the information about the rotational position of the rotor 25 detected by the rotation sensor 29 and the magnetic disc 30, i.e. based on the information about the amount of winding or unwinding the seat belt 6, the ECU 10 controls the on/off of the electric motor 22, the rotation number of the electric motor 22, the rotational direction of the electric motor 22, the load of the electric motor 22, and the like. In this regard, the ECU 10 actually controls the power supply amount (specifically, current value or voltage value supplied to the coil) and the power supply direction (specifically, the direction of current supply to the coil) so as to perform the aforementioned various controls of the electric motor 22.

By using the brushless motor as the electric motor 22 as mentioned above, the necessity of sensors specially for detecting the rotational position, the rotational speed, and the rotational direction of the rotor 25 is eliminated, thereby simplifying the structure and thus effectively reducing the size of the electric motor 22, improving the output of the electric motor 22, and improving the radiation property.

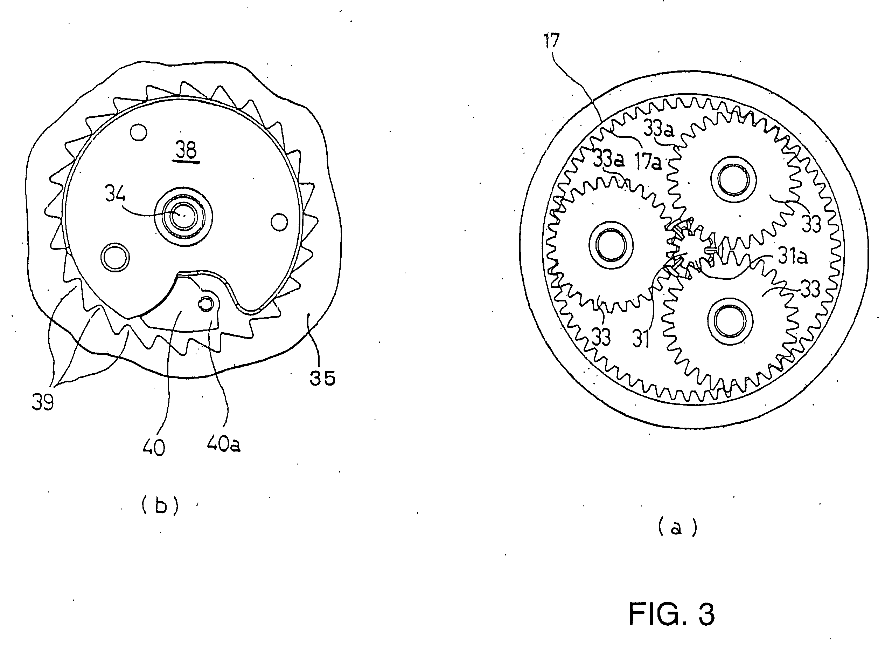

An annular sun gear 31 having external teeth 31 a is formed at an end portion 25a of the rotor 25 on the side wall 12 side such that the sun gear 31 can rotate together with the rotor 25. The external teeth 31a of the sun gear 31 are positioned to face the internal teeth 17a of the internal gear 17. The disc-like carrier 32 is connected and fixed to the end wall 21 of the spool 18 such that the carrier 32 can rotate together with the spool 18. Between the end wall 21 of the spool 18 and the carrier 32, planetary gears 33 each having external teeth 33a are rotatably disposed. As shown in Fig. 3(a), three planetary gears 33 are arranged to be equally spaced from each other in the circumferential direction. The external teeth 33a of the each planetary gear 33 are always meshed with the external teeth 31a of the sun gear 31 and the internal teeth 17a of the internal gear 17. In this case, the internal gear 17, the sun gear 31, and the planetary gears 33 are aligned in a same plane perpendicular to the axial direction (the left-right direction in Fig. 2), thereby achieving the reduction of length in the axial direction.

With the aforementioned structure, the rotation of the rotor 25 of the electric motor 22 is reduced and transmitted to the spool 18 via the sun gear 31, the planetary gears 33, and the carrier 32 so that the spool 18 is rotated at a reduced speed by the rotation of the electric motor 22. The sun gear 31, the carrier 32, and the planetary gears 33 compose a planetary gear train reduction mechanism as the reduction mechanism.

A torsion bar 34 as an EA mechanism is provided to extend through the cylindrical rotor 25. An end of the torsion bar 34 on the carrier 32 side is a head 34a having a hexagonal shape. The head 34a is fitted into a hexagonal concave portion 32a which is formed in the carrier 32 so that the head 34a is not allowed to rotate relative to the carrier 32.

A third side wall 35 is arranged to be spaced apart from the side wall 13. Disposed on the third side wall 35 are a deceleration sensing means 36 which is actuated by sensing a large deceleration of the vehicle occurring in the event of an emergency and a locking mechanism 37 which is actuated by the deceleration sensing means 36 to lock at least the spool 18 from rotation in the belt unwinding direction. The deceleration sensing means 36 and the locking mechanism 37 are conventionally well known as disclosed in, for example, Japanese Unexamined Patent Publication No. 2002-120694 and Japanese Unexamined Patent Publication No. 2001-122077. The structures and works of the deceleration sensing means 36 and the locking mechanism 37 should be easily understood by reading these publications. Since these are not directly related to the present invention, concrete description of these is omitted, but quite brief description will be made.

As shown in Fig. 2 and Fig. 3(b), the locking mechanism 37 comprises a locking base (corresponding to the "locking member" of the present invention) 38 disposed at the end, opposite to the head 34a, of the torsion bar 34. On the locking base 38, a pawl 40 having an engaging claw 40a which can engage one of annular internal teeth 39 formed in the third side wall 35 is rockably supported. The locking mechanism 37 also comprises a lock gear 41 which is attached to the torsion bar 34 adjacent to the locking base 38. When the deceleration sensing means 36 is not actuated, the lock gear 41 can rotate together with the torsion bar 34, that is, is not allowed to rotate relative to the locking base 38 and keeps the pawl 40 at a position where the engaging claw 40a is impossible to engage the internal teeth 39. When the deceleration sensing means 36 is actuated, the lock gear 41 is allowed to rotate relative to the torsion bar 34 and the locking base 38 and moves the pawl 40 to a position where the engaging claw 40a can engage the internal teeth 39.

Therefore, in the normal state where the deceleration sensing means 36 is not actuated, the locking base 38 and the lock gear 41 are allowed to freely rotate and rotate together with the torsion bar 34 and the spool 18. On the other hand, in the event of an emergency where the deceleration sensing means 36 is actuated, the rotation of the lock gear 41 is stopped to generate rotational difference between the lock gear 41 and the torsion bar 34 so as to move the pawl 40, whereby the engaging claw 40a engages one of the internal teeth 39 of the third side wall 35. Therefore, the locking base 38 and the mounting portion of the torsion bar 34 to which the locking base 38 is attached are locked from rotation in the belt unwinding direction. Accordingly, the spool 18 is locked from overly large rotation in the belt unwinding direction.

In the seat belt retractor 3 of this embodiment having the aforementioned structure, the locking mechanism 37 is not actuated so that the locking base 38 is allowed to freely rotate when the electric motor 22 is not driven to rotate. Therefore, the occupant can freely unwind the seat belt 6 from the spool 18 of the seat belt retractor 3.

As the occupant insert and latch the tongue 8 to the buckle 9 after the occupant is seated in the vehicle seat 5 and unwinds a predetermined amount of the seat belt 6, the buckle switch as one of the input means 11 is actuated so as to input information about latching between the tongue 8 and the buckle 9 into the ECU 10. Then, the ECU 10 drives the electric motor 22 to rotate in the belt winding direction. The rotation of the electric motor 22 is reduced and transmitted to the spool 18 through the planetary gear train reduction mechanism. Accordingly, the spool 18 rotates in the belt winding direction so that the seat belt 6 excessively unwound is wound onto the spool 18, thereby removing the slack of the seat belt 6.

As the slack of the seat belt 6 is removed by the belt winding action, further belt winding action produces belt tension on the seat belt 6 and increases the supply current or the supply voltage to the electric motor 22. At least one of the belt tension, the supply current and the supply voltage to the electric motor 22 during this is detected by a suitable detecting means as one of the input means 11 and is inputted into the ECU 10. As at least one of the belt tension, the supply current, and the supply voltage inputted reaches the corresponding predetermined value, the ECU 10 stops the rotation of the electric motor 22. This state is maintained and the driving of the vehicle is started. After stopping the rotation of the electric motor 22, the ECU 10 may rotate the electric motor 22 in the opposite direction, i.e. the belt unwinding direction slightly. Therefore, the spool 18 is rotated in the belt unwinding direction through the planetary gear train reduction mechanism to unwind a predetermined amount of the seat belt 6 so as to set the belt tension to be 0 or nearly 0, thereby making the occupant in the comfortable state.

During the driving of the vehicle, the ECU 10 performs the aforementioned various controls of the electric motor 22 based on various information required for motor control which are inputted from the input means 11 such that the belt tension is controlled to be suitable degree according to the various information.

As the vehicle is stopped and the occupant releases the tongue 8 from the buckle 9 to cancel the latching for the purpose of exiting the vehicle, the buckle switch becomes to the inoperative state and input information about unlatching between the tongue 8 and the buckle 9 into the ECU 10. Then, the ECU 10 drives the electric motor 22 to rotate in the belt winding direction. By the rotation of the electric motor 22 in the belt winding direction, the spool 18 winds up the all amount of the seat belt 6, i.e. the unwound amount for wearing, until the seat belt 6 becomes to the initial fully wound state. Therefore, the seat belt 6 is accommodated in the seat belt retractor 3. As the seat belt 6 is fully wound, the ECU 10 stops the rotation of the electric motor 22 based on the information that the seat belt is fully wound from the rotation sensor 29 and the magnetic disc 30.

In the event of an emergency such as a vehicle collision where a large deceleration acts on the vehicle during the driving of the vehicle, the deceleration sensing means 36 is actuated so as to lock the rotation in the belt unwinding direction of the lock gear 41 which rotates together with the rotation of the spool 18 in the belt unwinding direction because the seat belt 6 is about to be unwound by inertial movement of the occupant. However, by further inertial movement of the occupant, the locking base 38 is forced to continue the rotation in the belt unwinding direction so as to create relative rotation between the lock gear 41 and the locking base 38. Because of the relative rotation, the lock gear 41 moves the pawl 40 on the locking base 38 toward the internal teeth 39 of the third side wall 35 so that the engaging claw 40a of the pawl 40 engages one of the internal teeth 39, thereby locking the locking base 38 from rotation in the belt unwinding direction, That is, the mounting portion of the torsion bar 34 as the EA mechanism to which the locking base 38 is attached is locked from rotation in the belt unwinding direction so that the mounting portion of the torsion bar 34 to which the locking base 38 is attached is stopped.

On the other hand, since the seat belt 6 is about to be unwound by further inertial movement of the occupant so that the spool 18 is about to continue the rotation in the belt unwinding direction, the head 34a of the torsion bar 34 is biased to rotate in the same direction via the carrier 32. Then, the torsion bar 34 starts to be torsionally deformed. The torsional deformation of the torsion bar 34 absorbs impact energy on the occupant, thereby limiting the load acting on the seat belt 6 not to be too large. In this manner, when an extremely large deceleration acts on the vehicle, the occupant can be restrained by the seat belt 6 without receiving large force from the seat belt 6.

According to the seat belt retractor 3 of this embodiment, the electric motor 22 is coaxially accommodated inside the cylindrical spool 18 so that the seat belt retractor 3 can be formed compact in the axial direction of the spool 18. Since the belt winding of the spool 18 is conducted by the rotary driving force of the electric motor 22, the necessity of a spring means for winding up the seat belt which is conventionally provided in conventionally well known seat belt retractors can be eliminated, thereby further achieving reduction in size of the seat belt retractor 3 in the axial direction.

Since the impact energy on the occupant is absorbed by the torsion bar 34 as the EA mechanism in the event of an emergency such as a vehicle collision, the load acting on the seat belt 6 is limited not to be too large. Since the EA mechanism is composed of the torsion bar 34, the structure of the EA mechanism can be simplified.

Further, in the seat belt apparatus 1 employing the seat belt retractor 3 of this embodiment, impact energy on the occupant can be absorbed by the torsion bar 34 when the occupant is restrained by the seat belt 6 in the event of an emergency such as a vehicle collision. Therefore, the occupant can be effectively restrained while softly protected without receiving large force from the seat belt 6.

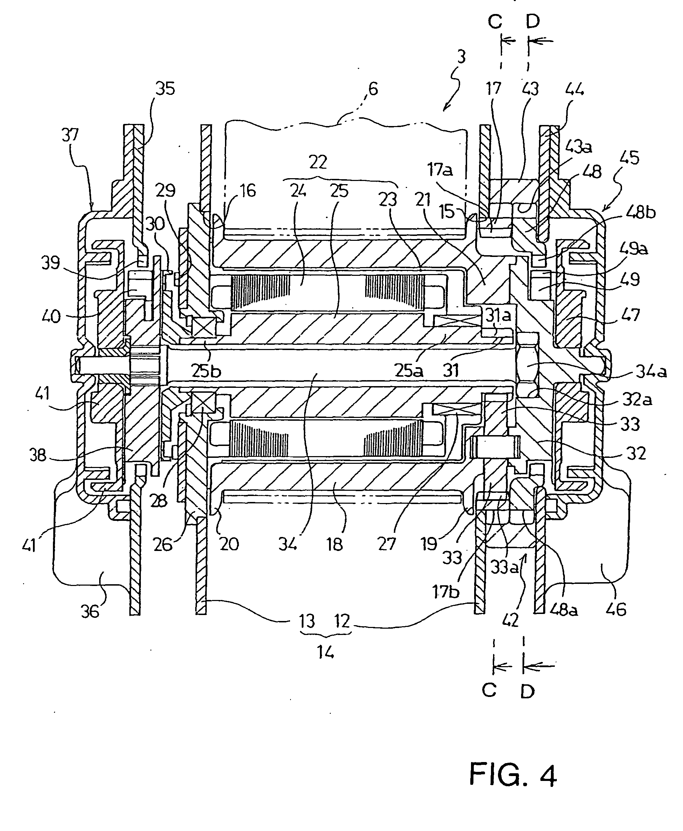

Fig. 4 is a sectional view similar to Fig. 2 showing another embodiment of the seat belt retractor of the present invention. In the following description, the same components as those of the aforementioned embodiment are marked with the same numerals so that the detailed description will be omitted.

Though the torsion bar 34 is used as the EA mechanism in the aforementioned embodiment shown in Fig. 2, the seat belt retractor 3 is provided with a second EA mechanism 42 as another EA mechanism in addition to the torsion bar 34 in the seat belt retractor 3 of this embodiment as shown in Fig. 4. The second EA mechanism 42 comprises a single annular friction disc 43 having internal teeth 43a. The friction disc 43 is composed of a single friction material. The friction disc 43 is sandwiched and held between the side wall 12 and the fourth side wall 44 and generates predetermined friction relative to both the side walls 12 and 44. As a predetermined rotational force overcoming the friction force is applied to the friction disc 43, the friction disc 43 can slide relative to the side walls 12 and 44 against the friction. On the other hand, when a rotational force lower than the predetermined rotational force is applied to the friction disc 43, the friction disc 43 can not slide relative to the side walls 12 and 44 against the friction.

The internal gear 17 of this embodiment is fitted in the opening 15 of the side wall 12 in the circumferential direction such that the internal gear 17 can rotate relative to the side wall 12 and has external teeth 17b formed around the outer periphery thereof. The external teeth 17b are always in mesh with the internal teeth 43a of the friction disk 43 so that the internal gear 17 and the friction disc 43 can rotate together with each other.

A second locking mechanism 45 and a second deceleration sensing means 46 are both disposed on the fourth side wall 44. The second locking mechanism 45 comprises a second lock gear 47 which is supported by the central shaft of the carrier 32 to allow relative rotation therebetween and a ring gear 48 adjacent to the internal gear 17. The ring gear 48 has external teeth 48a and internal teeth 48b. The external teeth 48a are always in mesh with the internal teeth 43a of the friction disc 43 so that the ring gear 48 and the friction disc 43 can rotate together with each other. On the carrier 32, a second pawl 49 having an engaging claw 49a which is engageable with the internal teeth 48b of the ring gear 48 is rockably supported.

In this case, the second lock gear 47, the internal teeth 48b, the second pawl 49, the second deceleration sensing means 46 have the same structures and the same actions as the lock gear 41, the internal teeth 39, the pawl 40, the deceleration sensing means 36, respectively, but are arranged symmetrically with these. In this embodiment, the carrier 32 also functions as a locking base having the same function as the locking base 38 of the locking mechanism 37.

When the second deceleration sensing means 46 is not actuated, the second lock gear 47 can rotate together with the carrier 32, that is, is not allowed to rotate relative to the carrier 32, and keeps the second pawl 49 at a position where the engaging claw 49a is impossible to engage the internal teeth 48b. When the second deceleration sensing means 46 is actuated, the second lock gear 47 is allowed to rotate relative to the carrier 32 and moves the second pawl 49 to a position where the engaging claw 49a thereof can engage the internal teeth 48b.

Therefore, in the normal state where the second deceleration sensing means 46 is not actuated, the second lock gear 47 rotates together with the carrier 32 and the second pawl 49 is not actuated so that the engaging claw 49a thereof does not engage the internal teeth 48b of the ring gear 48. Accordingly, the carrier 32 and the friction disc 43 are separated.

On the other hand, in the event of an emergency where the second deceleration sensing means 46 is actuated, the rotation of the second lock gear 47 is stopped to generate rotational difference between the second lock gear 47 and the carrier 32. Therefore, the second pawl 49 moves so that the engaging claw 49a thereof engages one of the internal teeth 48b of the ring gear 48. Therefore, the carrier 32 and the friction disc 43 are rotationally connected via the ring gear 48 so that the rotational force of the carrier 32 is transmitted to the friction disc 43 via the ring gear 48 so as to bias the friction disc 43 to rotate.

Since the rotational force of the carrier 32 is large because it is now in the event of an emergency, the rotational force for biasing the friction disc 43 to rotate via the ring gear 48 becomes larger than the aforementioned predetermined rotational force, the friction disc 43 overcomes the friction force and slides relative to the side walls 12 and 44 against the friction. By the frictional sliding of the friction disc 43, the impact energy on the occupant is absorbed, thereby limiting the force acting on the seat belt 6.

According to the seat belt retractor 3 of this embodiment, the energy absorption by the torsional deformation of the torsion bar 34 and the energy absorption by the frictional sliding of the single friction disk 43 effectively absorb the impact energy on the occupant, thereby effectively limiting the load applied to the seat belt 6.

Since the friction disc 43 of the second EA mechanism 42 is provided only between the side wall 12 as one of the side walls of the base frame 14 and the fourth side wall 44, the entire size in the axial direction of the seat belt retractor 3 is not so largely increased even with the second EA mechanism 42, thereby effectively achieving the reduction in size of the seat belt retractor 3.

The second EA mechanism 42 composed of the friction disc 43, the fourth side wall 44, the second locking mechanism 45, and the second deceleration sensing means 46 are combined into a unit, thereby facilitating the mounting of these components to the seat belt retractor 3.

Since the impact energy on the occupant is absorbed by the friction disc 43, the degree of freedom of design about the rotational amount of the spool 18 after the locking mechanism is actuated in the event of an emergency can be increased, the effect of absorbing the impact energy on the occupant can be set variously according to need.

The other structure and other works and effects of the seat belt retractor 3 and the seat belt apparatus 1 of this embodiment are the same of those of the seat belt retractor 3 and the seat belt apparatus 1 of the aforementioned embodiment.

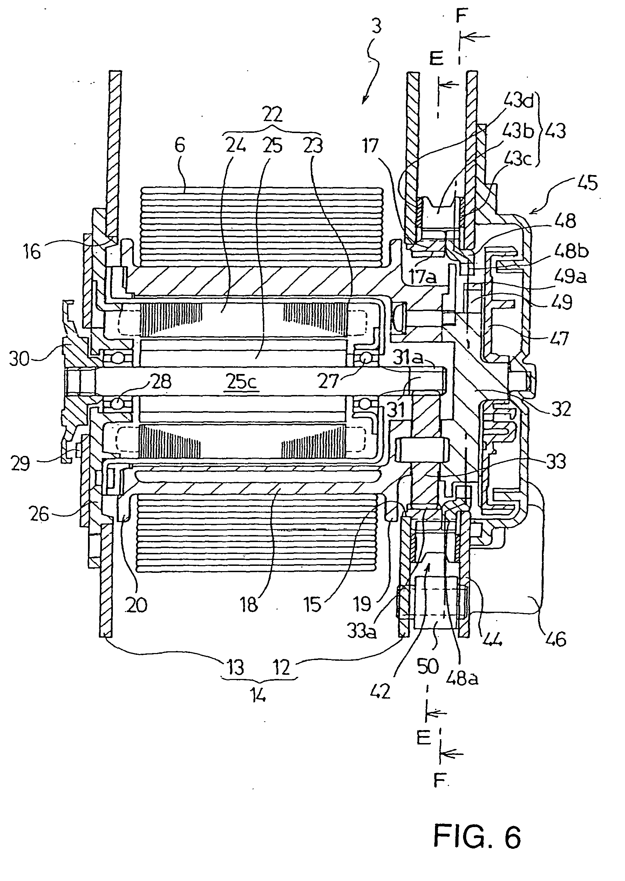

Fig. 6 is a sectional view similar to Fig. 2, but showing further another embodiment of the seat belt retractor of the present invention.

Though the EA mechanism comprises the torsion bar 34 and the second EA mechanism 42 composed of the single annular friction disc 43 in the embodiment shown in Fig. 4, a seat belt retractor 3 of this embodiment has no torsion bar 34 and comprises only a second EA mechanism 42 as shown in Fig. 6.

That is, in the seat belt retractor 3 of this embodiment, the rotor 25 of the motor 22 is a motor shaft 25c and the torsion bar 34 extending through the rotor 25 in the embodiment shown in Fig. 4 is not provided. A sun gear 31 is formed at an end of the motor shaft 25c on the side wall 12 side such that the sun gear 31 rotates together with the motor shaft 25c and a magnetic disc 30 is attached to the other end of the motor shaft 25c on the side wall 13 side such that the magnetic disc 30 rotates together with the motor shaft 25c. In the seat belt retractor 3 of this embodiment, the third side wall 35, the deceleration sensing means 36, and the locking mechanism 37 of any of the embodiments shown in Fig. 2 and Fig. 4 are not provided. Therefore, the structure of the seat belt retractor 3 on the side wall 13 side is simplified.

In the seat belt retractor 3 of this embodiment, the friction disc 43 comprises a ring-like friction disc supporting plate 43b and friction materials 43c, 43d which are formed into ring-like sheets and are bonded to the both side surfaces of the friction disc supporting plate 43b. The friction disc supporting plate 43b is provided with internal teeth 43a.

Numeral 50 in Fig. 6 is a spacing member which defines the space between the side wall 12 and the fourth side wall 44 for setting the clamping force of the side walls 12 and 44 for clamping the friction disc 43, that is, the friction force between the friction disc 43 and the side walls 12, 44, to a predetermined value. The spacing member 50 may be a predetermined number of one or more. The friction disc 43 of this embodiment may be composed of a single friction material as that of the embodiment shown in Fig. 4.

Though the spacing member 50 is not shown in Fig. 4, the spacing member 50 may be provided in the embodiment shown in Fig. 4. The friction disc 43 comprising the friction disc supporting plate 43b and the friction materials 43c, 43d may be employed as the friction disc 43 of the embodiment shown in Fig. 4.

In the seat belt retractor 3 of this embodiment, the impact energy on the occupant is absorbed by the energy absorption of friction sliding of the single friction disc 43, thereby limiting the load applied to the seat belt 6.

Since there is no torsion bar 34 in this embodiment, the length of the seat belt retractor 3 in the axial direction is shortened on the side wall 12 side. Since there is no third side wall 35, no deceleration sensing means 36, and no locking mechanism 37, the length of the seat belt retractor 3 in the axial direction is also shortened on the side wall 13 side, thereby achieving a compact seat belt retractor 3.

The other structure and other works and effects of the seat belt retractor 3 and the seat belt apparatus 1 of this embodiment are the same of those of the seat belt retractor 3 and the seat belt apparatus 1 of any of the aforementioned embodiments.

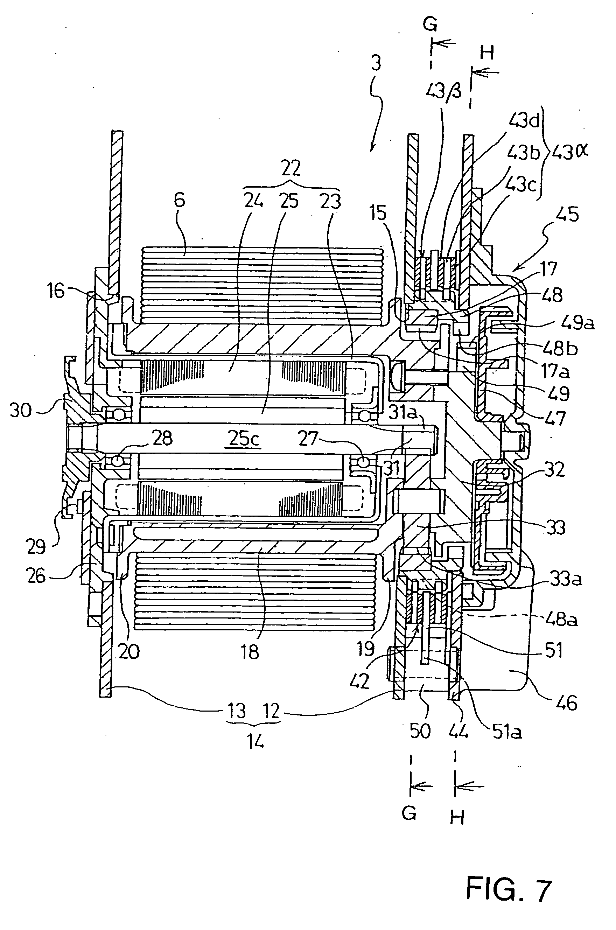

Fig. 7 is a sectional view similar to Fig. 2, but showing further another embodiment of the seat belt retractor of the present invention.

Though the embodiment shown in Fig. 6 has the second EA mechanism 42 composed of the single annular friction disc 43, the second EA mechanism 42 has a multiple disc structure composed of a plurality of (two in the illustrated example, but may be three or more) annular friction discs 43 in a seat belt retractor 3 of this embodiment as shown in Fig. 7.

That is, in the seat belt retractor 3 of this embodiment, a ring gear 48 is rotatably fitted to the opening 15 of the side wall 12 and an internal gear 17 is arranged inside the ring gear 48 such that the relative rotation between the internal gear 17 and the ring gear 48 is not allowed.

Between the side walls 12 and 44, two friction discs 43α, 43β are disposed. These friction discs 43α, 43β each have the same structure as the friction disc 43 of the embodiment shown in Fig. 6 except that the thickness of the friction disc supporting plate 43b. That is, each of the friction discs 43α, 43β comprises a friction disc supporting plate 43b and friction materials 43c, 43d bonded to the friction disc supporting plate 43b. It should be understood that the friction discs 43α, 43β may be a single friction disc as the embodiment shown in Fig. 4.

The ring gear 48 has external teeth 48a formed around the outer periphery thereof. The internal teeth 43a of the two friction disc supporting plates 43b of the friction discs 43α, 43β are in mesh with the external teeth 48a of the ring gear 48. In this regard, the friction discs 43α, 43β are allowed to slide relative to the ring gear 48 in the axial direction (the left-right direction in the drawing). Between the two friction discs 43α, 43β, a ring-like pressure receiving plate 51 is disposed. The pressure receiving plate 51 has a predetermined number of engaging portions 51a formed on the outer periphery thereof which can engage a predetermined number of spacing members 50, respectively. Since these engaging portions 51 a engage the corresponding spacing members 50, the pressure receiving plate 51 is not allowed to rotate and is allowed to slide relative to the spacing members 50 in the axial direction (the left-right direction in the drawing).

The friction disc 43α as one of the two friction discs 43α, 43β is clamped between the side wall 44 and the pressure receiving plate 51, while the other friction disc 43βis clamped between the side wall 12 and the pressure receiving plate 51, whereby a predetermined frictional force is set. Since the friction disc 43 is structured to have a multiple disc structure composed of the plates 43α, 43β in the aforementioned manner, a large frictional force can be generated so that the great absorption of impact energy on the occupant can be achieved by the second EA mechanism 42.

In the seat belt retractor 3 of this embodiment, the friction disc 43 is structured to have a multiple disc structure composed of the two friction discs 43α, 43 β, so that further efficient absorption of impact energy on the occupant can be achieved without increasing the size of the seat belt retractor 3.

The other structure and other works and effects of the seat belt retractor 3 and the seat belt apparatus 1 of this embodiment are the same of those of the seat belt retractor 3 and the seat belt apparatus 1 of the aforementioned embodiment shown in Fig. 6.

It should be understood that the friction disc 43 of the embodiment shown in Fig. 4 may have a multiple disc structure similarly to this embodiment.

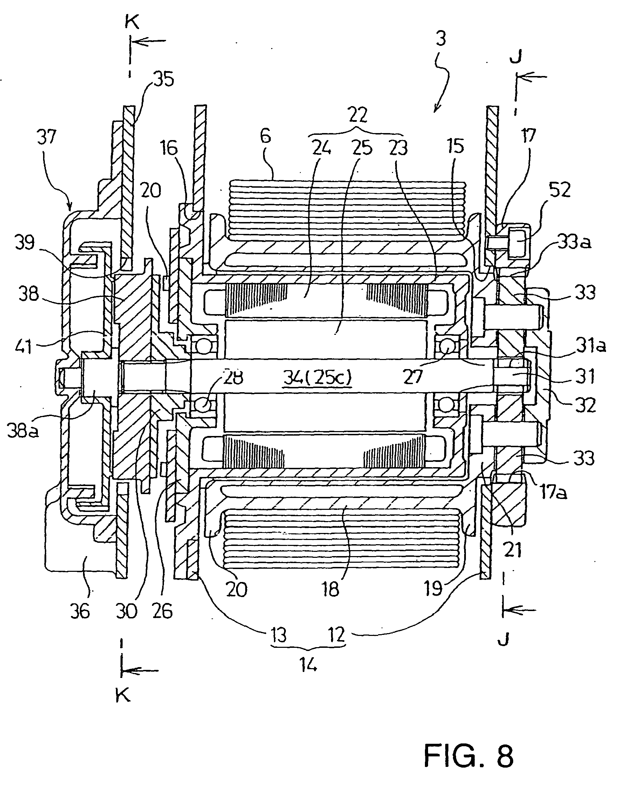

Fig. 8 is a sectional view similar to Fig. 2, but showing further another embodiment of the seat belt retractor of the present invention.

Though the torsion bar 34 is provided to extend through the hollow rotor 25 in the aforementioned embodiment shown in Fig. 2, the rotor 25 of the motor 22 is formed as a solid motor shaft 25c, similarly to the embodiment shown in Fig. 6, in a seat belt retractor 3 of this embodiment as shown in Fig. 8.

In the seat belt retractor 3 of this embodiment, the motor shaft 25c is structured also as a torsion bar 34. In this regard, the torsion bar 34 has no head 34a. A sun gear 31 is formed at an end of the torsion bar 34 on the side wall 12 side, similarly to the embodiment shown in Fig. 6. An internal gear 17 is not fitted in the opening 15 of the side wall 12 and is attached to the surface around the opening 15 of the side wall 12 by fixing means 52 such as bolts. Therefore, the carrier 32 and the torsion bar 34 are rotationally connected to each other via the planetary gears 33 and the sun gear 31.

In the seat belt retractor 3 of this embodiment, a magnetic disc 30 is attached to the other end of the motor shaft 25c (i.e. the torsion bar 34) on the side wall 13 side such that the magnetic disc 30 can rotate together with the motor shaft 25c similarly to the embodiment shown in Fig. 6. Further, a locking base 38 is attached to the end of the torsion bar 34 (i.e. the motor shaft 25c) on the side wall 13 side such that the locking base 38 can rotate together with the torsion bar 34. The locking base 38 has a central shaft 38a to which a lock gear 41 is attached. In this regard, the lock gear 41 is attached to the central shaft 38a in such a manner that, in the normal state, the lock gear 41 can rotate together with the central shaft 38a and, in the event of an emergency as mentioned above, the rotation of the lock gear 41 is locked by the action of the deceleration sensing means 36 and the central shaft 38a (i.e. locking base 38) can rotate relative to the lock gear 41 similarly to the aforementioned embodiments.

In the embodiment shown in Fig. 2, the carrier 32 directly rotates the head 34a of the torsion bar 34 during the locking operation of the locking mechanism 37 so as to torsionally deform the torsion bar 34, thereby conducting the EA operation by the torsion bar 34. In this embodiment, however, the carrier 32 rotates the torsion bar 34 via the planetary gears 33 and the sun gear 31 during the locking operation of the locking mechanism 37 so as to torsionally deform the torsion bar 34, thereby conducting the EA operation by the torsion bar 34.

In the seat belt retractor 3 of this embodiment, the torsion bar 34 is composed of the motor shaft 25c of the electric motor 22, thereby reducing the number of components and further simplifying the structure of the EA mechanism.

The other structure and other works and effects of the seat belt retractor 3 and the seat belt apparatus 1 of this embodiment are the same of those of the seat belt retractor 3 and the seat belt apparatus 1 of the aforementioned embodiment shown in Fig. 2.

Also in the seat belt retractor 3 of the embodiments shown in Fig. 6 and Fig. 7, the motor shaft 25c of the motor 22 may be structured as a torsion bar 34. It should be understood that, in this case, a locking mechanism 37 is required at the end of the motor shaft 25c on the side wall 13 side.

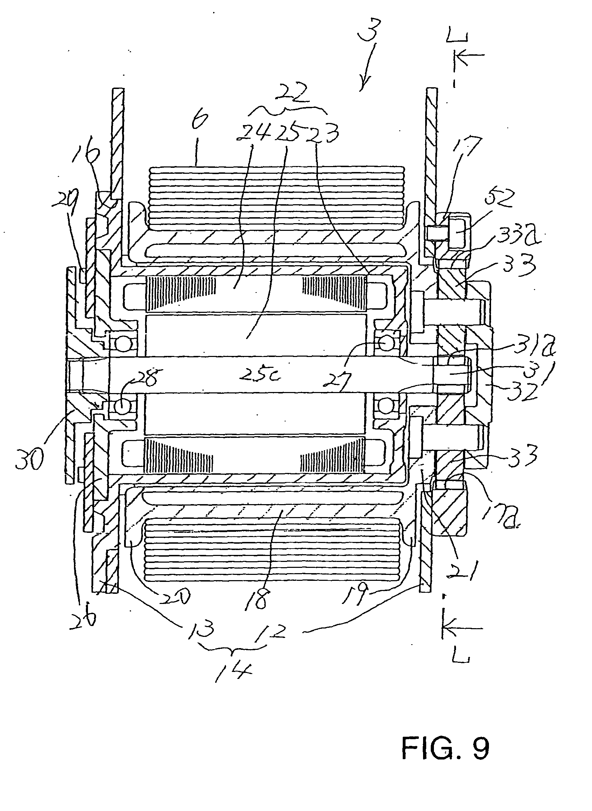

Fig. 9 is a sectional view similar to Fig. 2, but showing further another embodiment of the seat belt retractor of the present invention.

Though the EA mechanism is a mechanical EA mechanism employing at least one of the torsion bar 34 and the friction disc 43 to mechanically absorb the impact energy on the occupant in the seat belt retractor 3 of any of the aforementioned embodiments, a seat belt retractor 3 of this embodiment has no mechanical EA mechanism composed of the torsion bar 34 and/or the friction disc 43 as shown in Fig. 9. That is, the third side wall 35, the deceleration sensing means 36, and the locking mechanism 37 of the embodiment shown in Fig. 8 are not provided and the motor shaft 25c is not structured as a torsion bar 34. That is, the seat belt retractor 3 of this embodiment has no mechanical EA mechanism.

The EA mechanism of the seat belt retractor 3 of this embodiment is composed of an ECU 10 and input means 11 as shown in Fig. 1. That is, in this embodiment, the ECU 10 is also structured as a control device which controls the electric motor 22 to rotate in the belt unwinding direction at a predetermined rotation speed in the event of an emergency such as a vehicle collision where an extremely large deceleration as compared to normal deceleration acts on the vehicle. The input means 11 includes an acceleration sensor (not shown) which detects deceleration of the vehicle and outputs a detection signal to the ECU 10 as an electric signal.

In the seat belt retractor 3 of this embodiment having the aforementioned structure, when the ECU 10 determines, based on the deceleration of the vehicle detected by the acceleration sensor, that an extremely large deceleration as compared to normal deceleration of the vehicle is applied, the ECU 10 drives the electric motor 22 to rotate in the belt unwinding direction at a relatively low rotation speed. Then, the rotation of the electric motor 22 is reduced and transmitted to the spool 18 by the planetary gear reduction mechanism so that the spool 18 rotates slowly in the belt unwinding direction. At this point, the seat belt 6 is biased to be unwound by the inertia movement of occupant due to large deceleration. However, since the spool 18 rotates slowly in the belt unwinding direction, the load applied on the seat belt 6 is limited. Therefore, the impact energy on the occupant can be absorbed by the ECU 10 controlling the driving of the electric motor and the acceleration sensor as an input means 11 without any mechanical EA mechanism.

In the seat belt retractor 3 of this embodiment, the impact energy on the occupant in the event of an emergency can be absorbed without any mechanical EA mechanism so that the load applied on the seat belt is limited without any mechanical load limiting mechanism, thereby effectively simplifying the structure of the EA mechanism (i.e. the load limiting mechanism) and achieving the further reduction in size of the seat belt retractor 3.

The other structure and other works and effects of the seat belt retractor 3 and the seat belt apparatus 1 of this embodiment are the same of those of the seat belt retractor 3 and the seat belt apparatus 1 of the aforementioned embodiment shown in Fig. 8.

Though the embodiment shown in Fig. 9 does not employ any mechanical EA mechanism, the EA action by at least one of the torsion bar 34 and the friction disc 43 may be added in addition to the EA action by the driving control of the electric motor 22. In this case, at least either a combination of the third side wall 35, the deceleration sensing means 36, and locking mechanism 37 or a combination of the fourth side wall 44, the second deceleration sensing means 46, and the second locking mechanism 45 of the aforementioned embodiments is required. This case can more effectively provide EA effect.

Instead of the torsion bar 34 and the friction disc 43 as the mechanical EA mechanism, another mechanical EA mechanism such as cutting, shearing, or breaking as disclosed in Patent Document 2 may be employed.

### [Industrial Applicability]

The seat belt retractor of the present invention is suitably adopted to a seat belt retractor which is installed in a vehicle such as an automobile and which conducts the winding and unwinding of a seat belt for restraining and protecting an occupant by a motor.

## Claims

1. A seat belt retractor (3) comprising a cylindrical spool (18) which winds up and unwinds a seat belt (6), an electric motor (22) comprising a motor shaft (25c) and being disposed coaxially with said spool (18) in a columnar space inside said spool (18) and which generates rotary driving force for rotating said spool (18) in the belt winding direction and the belt unwinding direction, and an energy absorbing mechanism (34; 42) which absorbs impact energy on an occupant when said spool (18) rotates in the belt unwinding direction in the event of an emergency, **characterized by** a planetary gear train reduction mechanism (31-33) which is disposed between said spool (18) and said electric motor (22) to reduce and transmit the rotation of said motor (22).

2. A seat belt retractor (3) as claimed in claim 1, further comprising a locking mechanism (37; 45) having a locking member (38, 32) which rotates together with said spool (18) in the normal state and being actuated in the event of an emergency.

3. A seat belt retractor (3) as claimed in claim 2, wherein said locking member (38) of said locking mechanism (37) is adapted to rotate freely in the normal state and is locked from rotation in the belt unwinding direction in the event of an emergency, and
said energy absorbing mechanism (34) is composed of a torsion bar (34) disposed between said spool (18) and said locking member (38).

4. A seat belt retractor as claimed in claim 3, wherein said torsion bar (34) is a motor shaft (25c) of said electric motor (22).

5. A seat belt retractor (3) as claimed in any one of claims 2 through 4, wherein said locking member (32) of said locking mechanism (45) is adapted to rotate together with said spool (18) and said energy absorbing mechanism (42) is composed of a friction disc (43; 43α, 43β) which is adapted to rotate with friction, and
said locking member (32) is separated from said friction disc (43; 43α, 43β) in the normal state and is rotationally connected to said friction disc (43; 43α, 43β) in the event of an emergency.

6. A seat belt retractor (3) as claimed in claim 5, wherein said friction disc (43α, 43β) is structured to have a multiple disc structure composed of a plurality of discs (43α, 43β).

7. A seat belt retractor (3) as claimed in any one of claims 3 or 4 and any one of claims 5 or 6, wherein the seat belt retractor (3) comprises a locking mechanism (37) and an energy absorbing mechanism (34) according to any one of claims 3 or 4, and wherein the seat belt retractor (3) further comprises a locking mechanism (45) and an energy absorbing mechanism (42) according to any one of claims 5 or 6.

8. A seat belt retractor as claimed in claim 1, wherein said energy absorbing mechanism is a control unit for driving said electric motor to rotate in the belt unwinding direction in the event of an emergency.

9. A seat belt apparatus comprising at least: a seat belt for restraining an occupant; a seat belt retractor for winding and unwinding said seat belt; a tongue slidably supported by said seat belt; and a buckle to which said tongue is detachably latched, wherein
said seat belt retractor is a seat belt retractor as claimed in any one of claims 1 through 8.

## Patentansprüche

1. Sitzgurtaufrollvorrichtung (3) umfassend eine zylindrische Spule (18), die einen Sitzgurt (6) auf- und abwickelt, einen Elektromotor (22), welcher eine Motorwelle (25c) umfasst und in einem säulenartigen Raum innerhalb der Spule (18) koaxial mit der Spule (18) angeordnet ist und welcher eine drehend antreibende Kraft erzeugt, um die Spule (18) in der den Gurt aufwickelnden Richtung und in der den Gurt abwickelnden Richtung zu drehen, und einen Energie absorbierenden Mechanismus (34; 42), welcher eine auf einen Insassen einwirkende Stoßenergie absorbiert, wenn sich die Spule (18) in der den Gurt abwickelnden Richtung bei einem Notfall dreht,
**gekennzeichnet durch** einen Planetenuntersetzungsgetriebemechanismus (31-33), welcher zwischen der Spule (18) und dem Elektromotor (22) angeordnet ist, um die Drehbewegung des Motors (22) zu verringern und zu übertragen.

2. Sitzgurtaufrollvorrichtung (3) nach Anspruch 1,
weiter einen Verriegelungsmechanismus (37; 45) umfassend, welcher ein Verriegelungsteil (38, 32) aufweist, welches sich zusammen mit der Spule (18) in einem normalen Zustand dreht und bei dem Notfall betätigt wird.

3. Sitzgurtaufrollvorrichtung (3) nach Anspruch 2,
wobei das Verriegelungsteil (38) des Verriegelungsmechanismus (37) derart ausgestaltet ist, dass es sich in dem normalen Zustand frei dreht und dass es sich gegenüber einer Drehung in der den Gurt abwickelnden Richtung bei dem Notfall verriegelt ist, und
wobei der Energie absorbierende Mechanismus (34) aus einem Torsionsstab (34) besteht, welcher zwischen der Spule (18) und dem Verriegelungsteil (38) angeordnet ist.

4. Sitzgurtaufrollvorrichtung (3) nach Anspruch 3,
wobei der Torsionsstab (34) eine Motorwelle (25c) des Elektromotors (22) ist.

5. Sitzgurtaufrollvorrichtung (3) nach einem der Ansprüche 2 bis 4,
wobei das Verriegelungsteil (32) des Verriegelungsmechanismus (45) derart ausgestaltet ist, dass es sich zusammen mit der Spule (18) dreht, und wobei der Energie absorbierende Mechanismus (42) aus einer Reibscheibe (43; 43α, 43β) besteht, welche derart ausgestaltet ist, dass sie sich mit einer Reibung dreht, und
wobei das Verriegelungsteil (32) in dem normalen Zustand von der Reibscheibe (43; 43α, 43β) getrennt ist und bei dem Notfall drehend mit der Reibscheibe (43; 43α, 43β) verbunden ist.

6. Sitzgurtaufrollvorrichtung (3) nach Anspruch 5, wobei die Reibscheibe (43α, 43β) eine derartige Struktur aufweist, dass sie mehrere Scheibenstrukturen umfasst, welche aus mehreren Scheiben (43α, 43β) bestehen.

7. Sitzgurtaufrollvorrichtung (3) nach einem der Ansprüche 3 oder 4 und nach einem der Ansprüche 5 oder 6, wobei die Sitzgurtaufrollvorrichtung (3) einen Verriegelungsmechanismus (37) und einen Energie absorbierenden Mechanismus (34) nach einem der Ansprüche 3 oder 4 umfasst, und wobei die Sitzgurtaufrollvorrichtung (3) darüber hinaus einen Verriegelungsmechanismus (45) und einen Energie absorbierenden Mechanismus (42) nach einem der Ansprüche 5 oder 6 umfasst.

8. Sitzgurtaufrollvorrichtung nach Anspruch 1, wobei der Energie absorbierende Mechanismus eine Steuereinheit zum Antrieb des Elektromotors ist, damit sich dieser bei dem Notfall in der den Gurt abwickelnden Richtung dreht.

9. Sitzgurtvorrichtung, welche zumindest umfasst: einen Sitzgurt, um einen Insassen zu halten; eine Sitzgurtaufrollvorrichtung, um den Sitzgurt auf- und abzuwickeln; eine Zunge, welche gleitend durch den Sitzgurt gehalten wird; und ein Gurtschloss, mit welchem die Zunge lösbar verriegelt wird,
wobei die Sitzgurtaufrollvorrichtung eine Sitzgurtaufrollvorrichtung nach einem der Ansprüche 1 bis 8 ist.

## Revendications

1. Rétracteur pour ceinture de sécurité (3), comprenant une bobine (18) cylindrique, qui enroule et déroule une ceinture de sécurité (6), un moteur électrique (22), comprenant un arbre de moteur (25c) et disposé coaxialement à ladite bobine (18), dans un espace colonnaire à l'intérieur de ladite bobine (18) et qui engendre une force d'entraînement en rotation, pour faire tourner ladite bobine (18) dans le sens de l'enroulement de la ceinture et dans le sens de déroulement de la ceinture, et un mécanisme d'absorption d'énergie (34 ; 42), qui absorbe l'énergie d'impact exercée sur un occupant, lorsque ladite bobine (18) tourne dans le sens de déroulement de la ceinture, dans l'éventualité d'une urgence, **caractérisé par** un mécanisme de réduction (31 à 33) à train d'engrenage planétaire, disposé entre ladite bobine (18) et ledit moteur électrique (22), pour réduire et transmettre la rotation dudit moteur (22).

2. Rétracteur pour ceinture de sécurité (3) selon la revendication 1, comprenant en outre un mécanisme de verrouillage (37 ; 45), ayant un organe de verrouillage (38, 32) qui tourne, conjointement avec ladite bobine (18), à l'état normal, et est actionné en cas d'urgence.

3. Rétracteur pour ceinture de sécurité (3) selon la revendication 2, dans lequel ledit organe de verrouillage (38) dudit mécanisme de verrouillage (37) est agencé pour tourner librement à l'état normal, et est bloqué en rotation, dans le sens de déroulement de la ceinture, dans le cas d'une urgence, et
ledit mécanisme d'absorption d'énergie (34) est composé d'une barre de torsion (34), disposée entre ladite bobine (18) et ledit organe de verrouillage (38).

4. Rétracteur pour ceinture de sécurité (3) selon la revendication 3, dans lequel ladite barre de torsion (34) est un arbre de moteur (25c) dudit moteur électrique (22).

5. Rétracteur pour ceinture de sécurité (3) selon l'une quelconque des revendications 2 à 4, dans lequel ledit organe de verrouillage (32) dudit mécanisme de verrouillage (45) est agencé pour tourner, conjointement avec ladite bobine (18), et ledit mécanisme d'absorption d'énergie (42) est composé d'un disque de friction (43, 43α, 43β) qui est agencé pour tourner avec frottement, et
ledit organe de verrouillage (32) est séparé du dit disque de friction (43, 43α, 43β) à l'état normal et est relié en rotation au dit disque de friction (43, 43α, 43β) en cas d'urgence.

6. Rétracteur pour ceinture de sécurité (3) selon la revendication 5, dans lequel ledit disque de friction (43α, 43β) est construit pour avoir une structure à disques multiples, composée d'une pluralité de disques (43α, 43β).

7. Rétracteur pour ceinture de sécurité (3) selon l'une quelconque des revendications 3 et 4 et selon l'une quelconque des revendications 5 et 6, dans lequel le rétracteur pour ceinture de sécurité (3) comprend un mécanisme de verrouillage (37) et un mécanisme d'absorption d'énergie (34), selon l'une quelconque des revendications 3 et 4, et dans lequel le rétracteur pour ceinture de sécurité (3) comprend en outre un mécanisme de verrouillage (45) et un mécanisme d'absorption d'énergie (42), selon l'une quelconque des revendications 5 ou 6.

8. Rétracteur pour ceinture de sécurité selon la revendication 1, dans lequel ledit mécanisme d'absorption d'énergie est une unité de commande, pour commander ledit moteur électrique en rotation dans le sens de déroulement de la ceinture, en cas d'urgence.

9. Dispositif à ceinture de sécurité, comprenant au moins : une ceinture de sécurité, pour retenir un occupant ; un rétracteur pour ceinture de sécurité, pour enrouler et dérouler ladite ceinture de sécurité ; une languette, supportée à glissement par ladite ceinture de sécurité ; et une boucle, à laquelle ladite languette est verrouillée de façon amovible, dans lequel :
ledit rétracteur pour ceinture de sécurité est un rétracteur pour ceinture de sécurité tel que revendiqué selon l'une quelconque des revendications 1 à 8.
